# EUROPEAN PATENT APPLICATION

(11) **EP 1 826 421 A1**
(43) Date of publication of application: **29.08.2007**
(21) Application number: 06110348.7
(22) Date of filing: 23.02.2006
(51) Int. Cl.: F16B 41/00, G09F 3/03, G01N 29/00, G08B 13/14, G08B 25/00

(54) **Sealing device and method for sealing**

(71) Applicant: The European Community, represented by the European Commission, 1049 Brussels (BE)
(72) Inventor: AZZALIN, Graziano, 28047, Oleggio (IT); SIRONI, Marco, 21014, Laveno-Mombello (IT); TEBALDI, Piercarlo, 21020, Brebbia (IT)
(74) Representative: Lambert, Romain Ramon

(57) **Abstract**

A sealing device (10) comprising a first sealing element (12) having a housing with an internal chamber therein and a second sealing element (14) having a shaft (34). When the first and second sealing elements are connected, the shaft (34) of the second sealing element extends into the internal chamber of the first sealing element through an opening in its housing. According to an important aspect of the invention, the first sealing element comprises a pressure sensor (46) connected to the internal chamber for sensing a pressure in the internal chamber; and a transmitter (48) for receiving a signal indicative of the pressure in the internal chamber and for transmitting the signal to a monitoring station.

## Description

### Introduction

The present invention relates to a sealing device, in particular for a commercial container. The present invention also relates to a method for sealing, in particular for sealing such a commercial container.

The sealing of containers is often necessary for security reasons. Secure sealing of a container is of particular importance in case the container holds dangerous substances, such as for example fissile materials. It is further important to be able to easily identify the container and thereby its contents. Sealing devices are therefore often provided with identification elements. In an effort to increase security of the seal, such identification elements are often concealed and difficult to tamper with. As a result, such sealing devices can become rather expensive to produce. Furthermore, it is often difficult to verify if the sealing device has been correctly installed and if, and particularly when, it has been tampered with or broken. Depending on the contents of the container, it can be of great importance to be quickly informed of an illegal opening of the container.

It is currently not possible to easily verify if the sealing device is correctly installed. Some systems exist for verifying if the sealing device has been tampered with. These systems are however generally unreliable or to complex and expensive.

There is hence a need to further improve the security of such sealing devices.

### Object of the invention

The object of the present invention is to provide an improved sealing device, which allows to easily and quickly verify for correct installation. This object is solved by the sealing device described in claim 1. It is a further object of the present invention to provide an improved sealing device, which allows to easily and quickly check the integrity of the sealing device. This object is solved by the method described in claim 15.

### General description of the invention

The present invention proposes a sealing device comprising a first sealing element having a housing with an internal chamber therein; and a second sealing element having a shaft. When the first and second sealing elements are connected, the shaft of the second sealing element extends into the internal chamber of the first sealing element through an opening in its housing. According to an important aspect of the present invention, the first sealing element comprises a pressure sensor connected to the internal chamber for sensing a pressure in the internal chamber; and a transmitter for receiving a signal indicative of the pressure in the internal chamber and for transmitting the signal to a monitoring station.

The pressure sensor in the housing allows monitoring of the pressure in the internal chamber. The configuration of the sealing device is such that, when the second sealing element is connected to the first sealing element, the pressure in the internal chamber is increased due to the introduction of the shaft in the internal chamber. If the second sealing element is correctly connected to the first sealing element, the pressure is increased so as to reach a predetermined pressure range. As long as the second sealing element is not correctly connected to the first sealing device, the shaft does not sufficiently penetrate into the internal chamber of the housing. In turn, this means that the pressure in the internal chamber has not sufficiently increased to reach the predetermined pressure range. Only once the pressure in the internal chamber has reached the predetermined pressure range, it can be concluded that the sealing device is correctly installed. By sensing the pressure in the internal chamber, it is hence possible to determine if the first and second sealing elements are correctly connected, i.e. if the sealing device is correctly installed.

Furthermore, after installation of the sealing device, the integrity of the sealing device can be checked. When the sealing device is broken, the pressure in the internal chamber changes and leaves the predetermined pressure range. Indeed, as the first and second sealing elements are separated, the shaft is withdrawn from the internal chamber and the pressure drops. When the pressure in the internal chamber drops below a predetermined pressure threshold, it can be concluded that the sealing device is broken or disassembled. By sensing the pressure in the internal chamber, it is hence possible to determine if the first and second sealing elements are still correctly connected, i.e. if the integrity of the sealing device is maintained.

The transmitter in the first sealing element receives a signal indicative of the pressure in the internal chamber and transmits it to a monitoring station. The monitoring station, which may be installed at a remote location, can hence be used to verify if the sealing device has been correctly installed and to verify the integrity of the sealing device. If the integrity of the sealing device is violated, an alarm can be raised.

Advantageously, the first sealing element further comprises a membrane dividing the internal chamber into a first chamber and a second chamber, the first chamber facing the second sealing element, and the shaft of the second sealing element has a length such that, when the first and second sealing elements are connected, the shaft at least partially pushes the membrane into the second chamber so as to reduce the volume of the second chamber and hence increase the pressure therein. By providing such a membrane, it can be more easily ensured that the chamber to which the pressure sensor is connected is gastight. The internal chamber is divided into two separate chambers, wherein one, the first chamber, comprises an opening in the housing for receiving the shaft of the second sealing element, and the other, the second chamber, comprises the pressure sensor. By separating the chamber comprising the pressure sensor from the opening in the housing, it is no longer necessary to provide a gastight connection between the first and second sealing elements. This considerably simplifies the connection between the first and second sealing elements.

The membrane is preferably resilient, such that the membrane can return to its initial position when the shaft is withdrawn from the internal chamber, thereby causing a pressure drop in the second chamber. The resilience of the membrane can further provide an ejection force for the shaft, pushing the shaft out of the internal chamber more quickly, thereby obtaining a faster pressure drop in the second chamber. The violation of the integrity of the sealing device can hence be detected more quickly.

The first sealing element can further comprise fixing means for fixing a peripheral region of the membrane to an inner wall of the housing, wherein a central portion of the membrane can be pushed into the second chamber by the shaft.

The second sealing element can comprise a base with a sleeve perpendicularly mounted thereon, the shaft being received in the sleeve and, the base cooperating with the housing of the first sealing element for sandwiching fastening members between the first and second sealing elements.

According to a preferred embodiment of the invention, the housing is substantially cylindrical and has a substantially circular cross-section.

The sealing device preferably further comprises connecting means between the first and second sealing elements for connecting the first and second sealing elements and for maintaining the first and second sealing elements in their connected relationship.

Preferably, the sleeve has a threaded portion and the opening in the housing has a corresponding thread for receiving the threaded portion. This enables an easy connection of the second sealing element to the first sealing element, wherein the second sealing element is screwed to the first sealing element and tightened until the sealing device is correctly installed.

In a preferred embodiment, the transmitter is configured to continuously or periodically transmit the signal indicative of the pressure in the internal chamber to a monitoring station. By continuously or periodically, preferably at short intervals, transmitting information from the sealing device to a monitoring station, the status of the sealing device can be monitored in real time.

The transmitter preferably transmits automatically and is to that effect battery powered. It is however not excluded to provide a transmitter which only transmits the signal upon request e.g. from the monitoring station.

Advantageously, the transmitter comprises a modem using the GSM (e.g. GPRS) or UMTS standard for transmitting the signal indicative of the pressure in the internal chamber to the monitoring station. Such a transmitter can hence use existing networks for communicating with the monitoring stations, thus assuring low cost and high availability of communications. The status information of the sealing device can hence easily be transmitted all over the world. The correct installation and integrity of the sealing device can therefore be verified over very long distances.

Alternatively, the transmitter can be a RF transmitter for transmitting the signal indicative of the pressure in the internal chamber to the monitoring station. In such a case, the monitoring station can however generally not be too remote. The monitoring station can be a port reading station at a container park or a handheld reading station. It will however be appreciated that if the reading station is not within the transmitting range of the RF transmitter, the information cannot be transmitted to the monitoring station.

The sealing device can further comprise a transponder for storing contents information, travel information and/or inspection information of the container.

The sealing device can further comprise an event logger for storing a log of events. In case a communication cannot be established between the transmitter and the monitoring station, the information to be transmitted can be temporarily stored in the event logger. The stored information can then be transmitted to the monitoring station once the communication is restored.

The present invention further proposes a method for sealing a container comprising the steps of:
providing a sealing device having a first sealing element and a second sealing element, the first sealing element comprising a housing with an internal chamber therein and the second sealing element comprising a shaft;
passing the shaft of the second sealing element through fastening members of the container;
inserting the shaft of the second sealing element into the internal chamber of the first sealing element through an opening in the housing, thereby changing the pressure in the internal chamber;
sensing the pressure in the internal chamber by means of a pressure sensor connected to the internal chamber; and
transmitting a signal indicative of the pressure measured in the internal chamber to a monitoring station.

By sensing the pressure in the internal chamber, the connection status of the second sealing element to the first sealing element can be determined. The correct installation and the integrity of the sealing device can hence be verified by analysing a signal indicative of the pressure in the internal chamber.

The method preferably comprises the further steps of determining whether the measured pressure has exceeded a first predefined pressure threshold and concluding that the sealing device is correctly installed only if said measured pressure has exceeded said first predefined pressure threshold. If the first and second sealing elements are correctly connected, the shaft of the second sealing element penetrates the internal chamber sufficiently to increase the pressure in the internal chamber so as to exceed the first predetermined pressure threshold. If the first predetermined pressure threshold is exceeded, it can then be concluded that the first and second sealing elements have been correctly connected and that the sealing device has hence been correctly installed.

The method advantageously comprises the further steps of determining whether the measured pressure has fallen below a second predefined pressure threshold and concluding that, if the measured pressure has fallen below the second predefined pressure threshold, the sealing device has been broken. When the pressure in the internal chamber drops below a second predefined pressure threshold, this is an indication that the shaft of the second sealing element has been at least partially withdrawn from the internal chamber of the first sealing element or that the housing of the first sealing element has been broken. This points to a violation of the integrity of the sealing device. The second predefined pressure threshold should preferably be below or equal to the first predefined pressure threshold.

The method can comprise the further steps of determining whether the measured pressure has exceeded a third predefined pressure threshold and concluding that, if the measured pressure has exceeded the third predefined pressure threshold, the sealing device has been broken. When the pressure in the internal chamber exceeds a third predefined pressure threshold, this can be an indication that the housing of the first sealing element has been broken, in particular if the sealing device is arranged in a high pressure environment. This points to a violation of the integrity of the sealing device. The third predefined pressure threshold should be higher than the first predefined pressure threshold.

Preferably, the second and third predefined pressure thresholds are chosen so as to allow some pressure changes due to e.g. temperature variations.

### Detailed description with respect to the figures

The present invention will be more apparent from the following description of a not limiting embodiment with reference to the attached drawings, wherein
- Fig.1: shows a schematic cut through a sealing device according to the invention; and
- Fig.2: shows a schematic cut through the sealing device of Fig.1 in its unconnected state.

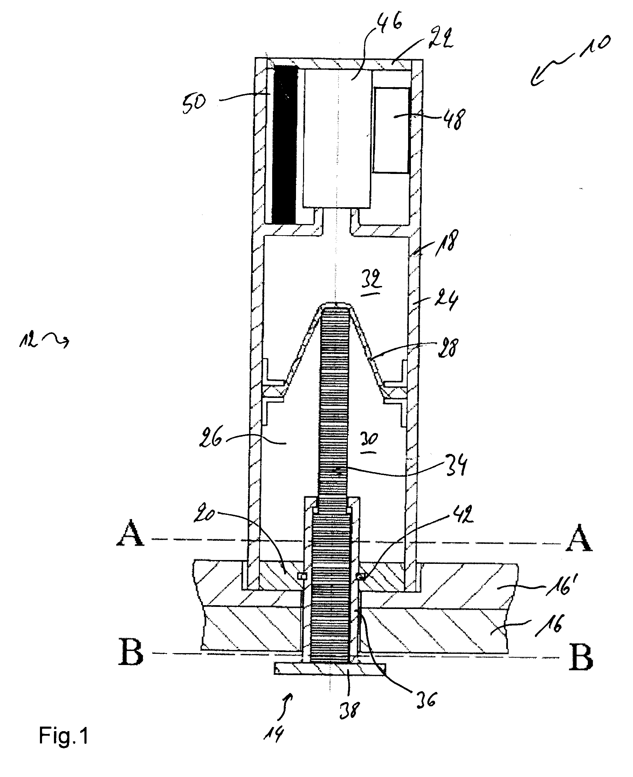

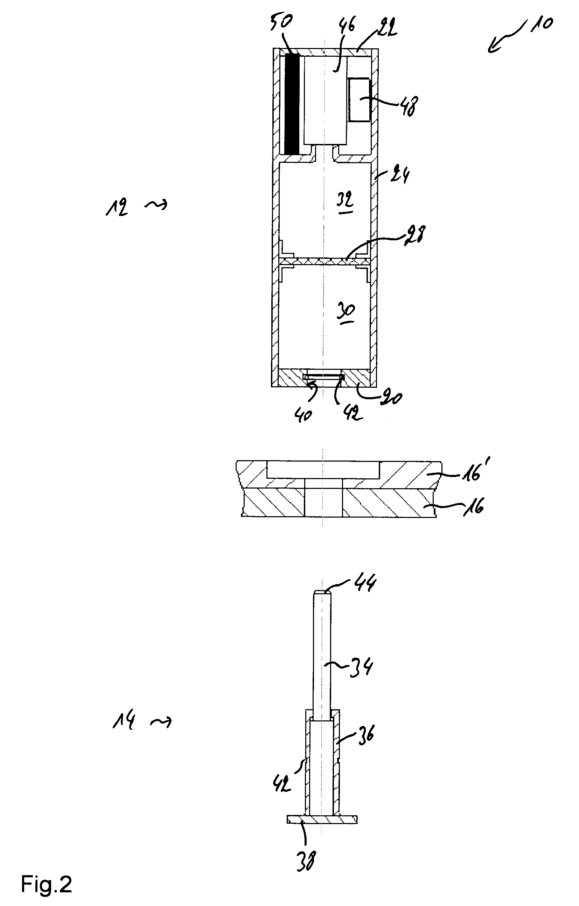

Figures 1 and 2 show a sealing device 10 comprising a first sealing element 12 and a second sealing element 14, which can be connected to the first sealing element 12. The first and second sealing elements 12, 14 are arranged and configured such that, when they are connected, two fastening members 16, 16' can be sandwiched therebetween. Fastening members 16, 16' can be any elements that need to be connected together in a secure way, such as e.g. a container body and a container door or respective fixing plates thereof. In the present invention any means for fixing two elements together, such as fixing plates, will be referred to as "fastening members".

The first sealing element 12 comprises a generally cylindrical housing 18 having a first end wall 20, a second end wall 22 and an enveloping wall 24 extending therebetween. The first and second end walls 20, 22 and the enveloping wall 24 define an internal chamber 26 inside the housing 18. The housing 18 further comprises a flexible membrane 28 therein for dividing the internal chamber 26 into a first chamber 30 and a second chamber 32, wherein the first chamber 30 is delimited by the flexible membrane 28, the first end wall 20 and the enveloping wall 24, whereas the second chamber 32 is delimited by the flexible membrane 28, the second end wall 22 and the enveloping wall 24.

The second sealing element 14 comprises a shaft 34 received in a sleeve 36 perpendicularly mounted on a base 38. The first end wall 20 of the first sealing element 12 comprises an opening 40 therein, having a diameter corresponding substantially to an outer diameter of the sleeve 36, such that the shaft 34 and sleeve 36 can penetrate the internal chamber 26 of the housing 18. The sealing device 10 further comprises connecting means 42 between the first and second sealing elements 12, 14 in order to, once connected, maintain the first and second sealing elements 12, 14 in their connected relationship.

The shaft 34 has a length such that, when the second sealing element 14 is correctly connected to the first sealing element 12, a free end 44 of the shaft 34 is in contact with the membrane 28 and pushes the latter into the second chamber 32. The second chamber 32 is gastight such that, as the membrane is pushed into the second chamber 32, the pressure in the second chamber 32 is increased.

A pressure sensor 46 is arranged in the housing 18 and is connected to the second chamber 32 for sensing the pressure therein. The pressure sensor 46 is preferably an active pressure sensor continuously or periodically sensing the pressure in the second chamber 32. The pressure sensor 46 is connected to a transmitter 48 for transmitting a pressure signal to a monitoring station (not shown).

Due to the pressure sensor 46, the pressure in the second chamber 32 can be determined. It can be concluded that the sealing device 10 has been correctly installed if the pressure in the second chamber 32 exceeds a first predefined pressure threshold. Indeed, when the second sealing element 14 is correctly connected to the first sealing element 12, the shaft 34 extends into the second chamber 32 by a certain amount, thereby compressing the gas, generally air, in the second chamber 32 by a certain amount. A signal indicative of the pressure in the second chamber 32 is received by the transmitter 48 and transmitted to the monitoring station. If the monitoring station can, based on the received signal, determine that the pressure in the second chamber 32 is above the first predefined pressure threshold, it can be concluded that the first and second sealing elements 12, 14 are correctly connected and that the sealing device 10 is correctly installed.

Furthermore, the pressure sensor 46 can be used to verify the integrity of the sealing device 10. Indeed, if the sealing device 10 is broken, e.g. along lines A-A or B-B in Fig.1, the first and second sealing elements 12, 14 are no longer correctly connected. The shaft 34 of the second sealing element 14 is retracted from the internal chamber 26 of the first sealing element 12, thereby reducing the pressure in the second chamber 32. If the pressure in the second chamber 32 drops below a second pressure threshold, it can be concluded that the sealing device 10 has been broken and an alarm can then be raised.

The transmitter 48 comprises a modem using the GSM, e.g. GPRS, or UMTS standard for transmitting the signal indicative of the pressure in the second chamber 32 to the monitoring station. Such a transmitter 48 can hence use existing networks for communicating with the monitoring stations, thus assuring low cost and high availability of communications. The status information of the sealing device 10 can hence easily be transmitted all over the world. The correct installation and integrity of the sealing device 10 can therefore be verified over very long distances. The transmitter 48 is, according to a preferred embodiment configured to periodically, at short intervals, transmit the pressure information from the pressure sensor 46 to the monitoring station.

Apart from the pressure information, the transmitter 48 can be used to transmit other information to the monitoring station, such as contents information, travel information or inspection information of the container. Depending on the nature of the shipment, audio and video files can also be transmitted if required.

The sealing device further comprises a programmable read/write transponder 50 for storing contents information, travel information and/or inspection information of the container. Such a transponder 50 can be read by means of a reading device communicating with the transponder 50 via radio frequency. The reading device can also be used to store information in the transponder 50. The transponder 50 can be used to identify the container and its contents on site. If the transponder 50 is linked to the transmitter 48, information from the transponder 50 can also be transmitted to the monitoring station.

An event logger (not shown) can furthermore be provided in the sealing device 10 for storing event information therein. Such an event logger can e.g. comprise a log of the measured pressure in the second chamber 32 over a particular period of time. The event logger can occupy a portion of the memory of the transponder 50. Alternatively, a separate memory can be provided for the event logger. If the transmitter cannot communicate with the monitoring station, the pressure information can be stored in the event logger and sent to the monitoring station once communication has been restored.

### List of Reference Signs

- 10: sealing device
- 12: first sealing element
- 14: second sealing element
- 16,16': fastening members
- 18: housing
- 20: first end wall
- 22: second end wall
- 24: enveloping wall
- 26: internal chamber
- 28: flexible membrane
- 30: first chamber

- 32: second chamber
- 34: shaft
- 36: sleeve
- 38: base
- 40: opening
- 42: connecting means
- 44: free end
- 46: pressure sensor
- 48: transmitter
- 50: programmable read/write transponder

## Claims

1. Sealing device comprising
a first sealing element having a housing with an internal chamber therein; and
a second sealing element having a shaft,
wherein, when said first and second sealing elements are connected, said shaft of said second sealing element extends into said internal chamber of said first sealing element through an opening in its housing;
**characterised in that** said first sealing element comprises
a pressure sensor connected to said internal chamber for sensing a pressure in said internal chamber; and
a transmitter for receiving a signal indicative of said pressure in said internal chamber and for transmitting said signal to a monitoring station.

2. Sealing device according to claim 1, wherein
said first sealing element further comprises a membrane dividing said internal chamber into a first chamber and a second chamber, said first chamber facing said second sealing element,
said shaft of said second sealing element has a length such that, when said first and second sealing elements are connected, said shaft at least partially pushes said membrane into said second chamber so as to reduce the volume of said second chamber.

3. Sealing device according to claim 2, wherein said membrane is resilient.

4. Sealing device according to claim 2 or 3, further comprising fixing means for fixing a peripheral region of said membrane to an inner wall of said housing,
wherein a central portion of said membrane can be pushed into said second chamber by said shaft.

5. Sealing device according to any of the previous claims, wherein said second sealing element comprises a base with a sleeve perpendicularly mounted thereon, said shaft being received in said sleeve and, said base cooperating with said housing of said first sealing element for sandwiching fastening members between said first and second sealing elements.

6. Sealing device according to any of the previous claims, wherein said housing is substantially cylindrical.

7. Sealing device according to any of the previous claims, wherein said housing has a substantially circular cross-section.

8. Sealing device according to any of the previous claims, further comprising connecting means between said first and second sealing elements.

9. Sealing device according to claims 5 and 8, wherein said sleeve has a threaded portion and said opening in said housing has a corresponding thread for receiving said threaded portion.

10. Sealing device according to any of the previous claims, wherein said transmitter is configured to continuously or periodically transmit said signal indicative of said pressure in said internal chamber to a monitoring station.

11. Sealing device according to any of claims 1 to 10, wherein said transmitter comprises a modem using the GSM or UMTS standard.

12. Sealing device according to any of claims 1 to 10, wherein said transmitter is a RF transmitter.

13. Sealing device according to any of the previous claims, further comprising a transponder.

14. Sealing device according to any of the previous claims, further comprising an event logger.

15. Method for sealing a container comprising the steps of:
providing a sealing device having a first sealing element and a second sealing element, said first sealing element comprising a housing with an internal chamber therein and said second sealing element comprising a shaft;
passing said shaft of said second sealing element through fastening members of the container;
inserting said shaft of said second sealing element into said internal chamber of said first sealing element through an opening in said housing, thereby changing the pressure in said internal chamber;
sensing the pressure in said internal chamber by means of a pressure sensor connected to said internal chamber; and
transmitting a signal indicative of the pressure measured in said internal chamber to a monitoring station.

16. Method according to claim 15, comprising the further steps of:
determining whether the measured pressure has exceeded a first predefined pressure threshold; and
concluding that the sealing device is correctly installed only if said measured pressure has exceeded said first predefined pressure threshold.

17. Method according to claim 15 or 16, comprising the further steps of:
determining whether the measured pressure has fallen below a second predefined pressure threshold; and
concluding that, if said measured pressure has fallen below said second predefined pressure threshold, said sealing device has been broken.

18. Method according to any of claims 15 to 17, comprising the further steps of:
determining whether the measured pressure has exceeded a third predefined pressure threshold; and
concluding that, if said measured pressure has exceeded said third predefined pressure threshold, said sealing device has been broken.
